(19) Europäisches Patentamt
European Patent Office
Office européen des brevets

(11) Publication number: 0 302 736 B1

(12) # EUROPEAN PATENT SPECIFICATION

(45) Date of publication of patent specification: **03.06.92** (51) Int. Cl.$^5$: **G09B 29/10**

(21) Application number: **88307240.7**

(22) Date of filing: **05.08.88**

(54) **Apparatus for displaying travel path.**

(30) Priority: **07.08.87 JP 198630/87**
**07.08.87 JP 198631/87**
**07.08.87 JP 198632/87**
**07.08.87 JP 198633/87**
**07.08.87 JP 198634/87**

(43) Date of publication of application:
**08.02.89 Bulletin 89/06**

(45) Publication of the grant of the patent:
**03.06.92 Bulletin 92/23**

(84) Designated Contracting States:
**DE FR GB**

(56) References cited:
**EP-A- 0 036 119**
**GB-A- 2 174 497**

**PROCEEDINGS OF THE 1985 INTERNATIONAL CONFERENCE ON INDUSTRIAL ELECTRONICS, CONTROL AND INSTRUMENTATION, San Francisco, California, 18th-22nd November 1985, vol. 1, pages 170-173, IEEE, New York, US; S.K. HONEY et al.: "A novel approach to automotive navigation and map display"**

(73) Proprietor: **HONDA GIKEN KOGYO KABUSHIKI KAISHA**
**1-1, 2-chome Minami-Aoyama**
**Minato-ku Tokyo(JP)**

(72) Inventor: **Iihoshi, Akira**
**c/o Honda Gijutsu Kenkyusho 4-1, 1-chome, Chuo**
**Wako-shi Saitama(JP)**
Inventor: **Matsumoto, Yoshiyuki**
**c/o Honda Gijutsu Kenkyusho 4-1, 1-chome, Chuo**
**Wako-shi Saitama(JP)**
Inventor: **Nakamura, Yukinobu**
**c/o Honda Gijutsu Kenkyusho 4-1, 1-chome, Chuo**
**Wako-shi Saitama(JP)**
Inventor: **Nishio, Tomoyuki**
**c/o Honda Gijutsu Kenkyusho 4-1, 1-chome, Chuo**
**Wako-shi Saitama(JP)**

(74) Representative: **Muir, Ian R. et al**
**HASELTINE LAKE & CO. Hazlitt House 28**
**Southampton Buildings Chancery Lane**
**London WC2A 1AT(GB)**

**EP 0 302 736 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an apparatus for displaying a travel path in which the current position of a moving body such as an automobile is given on a road map appearing on a screen.

In an attempt to prevent a driver from losing his way when travelling in a place in which he is a stranger, an apparatus for displaying a travel path has been proposed in which the current position of the moving body is sequentially estimated in terms of X-and Y-coordinates by carrying out algorithmic operation on the running distance and direction which are determined by an associated distance meter and direction sensor, to show him the current position of his car in the form of a dot on a road map appearing on a screen.

Accumulation of errors in determining the running distance and direction will cause a wrong indication of the current position of the car. Sometimes, a wrong current car position becomes increasingly separated from all roads appearing on the map until the driver cannot determine on which road his car is running.

In an attempt to solve this problem it has been proposed that a travel trace, having sequentially renewed estimated current car positions thereon, is compared with all the roads in the vicinity of the last estimated current car position on the screen to find similarity in pattern among these roads according to a conventional pattern matching process and select one, which is closest in shape to the travel trace, as the "true" road on which the car is running, and then the dot image of the last estimated current car position is put on the apparently true road.

This correction, however, will require much time if many roads and branch roads appear in the vicinity of the last estimated current car position because a pattern matching must be carried out for each of these selected roads.

A travel path displaying apparatus has been disclosed by the present applicants in GB-B-2 174 497. However this application divides the map roads and the travel path into line segments of variable length and selects certain road line segments (from those stored in memory) which correspond closely to the travel path line segments. Pattern matching of these selected road line segments with the travel path line segments is then performed over the whole area of the map.

With the above in mind the present invention seeks to provide an apparatus for displaying travel path which permits necessary pattern matching with an increased efficiency and accuracy to find the current position of a car within a minimum possible time.

Specifically, the invention seeks to provide an apparatus in which the necessary pattern matching is carried out on a reduced number of roads selected for identification.

Therefore, there is provided an apparatus for displaying a travel path, the apparatus comprising:

means for successively estimating coordinates of a current position of a moving body;

means for storing data relating to the successively estimated current positions of the moving body and data relating to the coordinates of roads along which the body may move;

display means for showing successively determined and/or estimated current positions of the moving body on a map including the roads; and

processing means, characterised in that the processing means is adapted such that:

at predetermined intervals it calculates presumable current positions for the body, a presumable current position being on a road at a distance, from a previously determined position for the body, that corresponds to the distance estimated to have been travelled by the body from that previously determined position;

for each presumable current position, a check is made to determine whether or not a given relationship between the presumable current position and the current estimated position is satisfied, and the or each presumable current position for which the relationship is satisfied becomes a selected presumable position;

pattern matching is effected, as required, between the estimated travel path of said moving body to the current estimated position, and only the or each road pattern from the previously determined position which includes a selected presumable current position; and

one such selected presumable current position is determined, on the basis of such pattern matching, to be the current position of the moving body.

With this arrangement necessary pattern-matching for reducing any offset of the estimated current car position from a road on which the car is supposed to run to find the exact current car position, is effected by setting a presumably current car position, on a road on which the car is supposed to run or its road branches; making a decision as to whether or not a predetermined relation representing the possible erroneous locating range, is established between the estimated current car position and the presumably current car position, and selecting in the affirmative case, the road or road branches each having the presumably current car position; and effecting a pattern matching between the travel trace having sequential estimated current car positions thereon and each of the so selected road or road branches. Thus, a least

number of road or road branches are selected for pattern-matching, and accordingly the time involved for pattern-matching can be reduced to possible minimum.

According to one aspect of the present invention each time the accumulation of directional increments reaches a fixed amount, necessary pattern-matching is effected between the travel trace drawn while directional increments were integrated and a selected road on the road map to make a decision as to whether or not the selected road is the one on which the car is running, thereby improving the efficiency with which the necessary pattern matching is effected to find the correct current car position.

According to another aspect of the present invention a travel trace having sequential estimated positions thereon and a selected road in the road map are given in the form of broken line composed of straight increments of equal length, and then necessary pattern-matching is effected by comparing each subsequent increment of the selected road approximation with corresponding increment of the travel trace approximation in terms of position and direction, thereby facilitating matching work and improving the accuracy with which pattern-matching is effected.

According to still another aspect of the present invention a travel trace having sequential estimated positions thereon and a selected road in the road map are given in the form of broken line composed of straight increments of equal length, and then necessary pattern-matching is effected by putting the travel trace approximation parallel with the selected road approximation and then determining correlation between each subsequent increment of the selected road approximation and corresponding increment of the travel trace approximation, facilitating matching work and improving the accuracy with which pattern-matching is effected.

According to still another aspect of the present invention in case that no presumably current position can be found within a first distance range from the last estimated car position, necessary pattern-matching is effected by setting a tentatively presumable current position on a road or roads running within a second longer distance range; setting sequentially tentatively presumable current positions on the same road or roads until a tentatively presumable current position on such road or one of such roads has come close to enter the first distance range from the last estimated position; and then regarding the tentatively presumable current position on such road or one of such roads as the presumable current position, thereby permitting necessary pattern matching to continue without interruption even if estimated car positions are far from roads on the road map.

For a better understanding of the present invention, and to show how it may be brought into effect, reference will now be made, by way of example, to the accompanying drawings in which:-

Fig. 1 is a block diagram schematically showing an apparatus for displaying a travel path according to the present invention.

Fig. 2 shows an image of a road map and a series of dots representing sequential current car positions appearing on the screen of the travel path displaying apparatus;

Fig. 3 shows a similar road map image, but showing departure of a travel course having sequential current car positions thereon from the road on the road map;

Figs. 4(a) and 4 (b) show how presumable current car positions are put on a road and road branches for each increment of running distance, respectively;

Fig. 5 shows how the last estimated car position are related with corresponding presumable current car positions on selected roads in the road map;

Fig. 6 shows how subsequent increments change in direction in a travel path;

Fig. 7 shows how a road pattern is formed, which road pattern is to be "nominated" for pattern-matching;

Figs. 8(a) and 8(b) show respectively travel trace and selected road approximations given in broken lines each composed of straight increments of equal length;

Fig. 9 shows how the travel trace and the last estimated car position are put in registration with a selected road, with which the travel path is identified;

Fig. 10 shows a road map image errorneously showing that a car is running away from course;

Figs. 11(a), 11(b) and 11(c) show how presumable current car positions are tentatively put on selected roads, which run across a circle drawn with the last estimated current car position on its center.

Referring to Fig. 1 there is schematically shown an apparatus for displaying travel path according to the present invention. It comprises an opto-electrical, electromagnetic or mechanical-contact type distance sensor 1 which is responsive for instance, to rotation of the wheels of a car for generating a pulse signal each time the car runs a unit distance; a direction sensor 2 such as a gyroscope which is capable of detecting any variation in angular speed in the yaw direction; a signal processing unit 3 which is composed of a central processor unit for controlling the whole system, ROMs for storing programs and RAMs for storing controlling data, the signal processing unit being capable of counting the pulses from the distance sensor 1 to determine the running distance of the car, determining the direction in which the car is running

on the basis of the signals from the direction sensor 2, and conduct ing accumulative algorithmic operation of vectors to determine the current car position in terms of X- and Y- coordinates for each unit running distance; a travel trace storing unit (RAM) 4 for sequentially storing the X- and y- coordinates of current car positions; a road map storage medium 5 storing different road maps in a file; a storage medium reader unit 8 for selectively reading different road maps in a file; a display unit 7 for presenting a selected road map and the travel trace in terms of sequential current car positions and directions on an associated screen; a manual operating unit 8 for sending commands for operation, selecting a desired road map from the file, setting a starting position at a given point on the selected road map, turning the selected road map or turning the travel trace on the selected map, shifting selected dots representing car positions on the road map, enlarging or reducing selected areas in the road map at a desired rate and performing other required operations.

In operation a selected road map appears on the screen of the display unit 7, and current car positions are given sequentially in dots on a selected road in the screen to indicate a travel trace which the car has already run while the signal processing unit 3 is carrying out necessary algorithmic operations to renew the X- and Y- coordinates of current car position in the travel trace storing unit (RAM) 4. Thus, as seen in Fig. 2, the screen of the display unit 7 shows the last estimated current car position $M_1$, the direction $M_2$ in which the car is about to run from the last estimated current car position, and sequential car positions $M_3$ plotted one after another from the starting position S.

The arrangement and operation described so far are the same as the conventional travel path displaying apparatus described above .

In the conventional travel path displaying apparatus, positioning errors are apt to be accumulated as a car runs a relatively long distance, and accordingly the travel trace deviates increasingly far from a selected road in the road map until the car cannot be located on the road map (as shown in Figure 3).

Such travel path displaying apparatus is improved according to the present invention in that the travel trace having sequential and last estimated current car positions thereon, is corrected and put in registration with the true road by selecting a road or roads in the vicinity of the last estimated current car position and conducting pattern-matching between the travel trace and each of the so selected roads. Specifically, the number of selected roads with respect to which the travel trace is to be checked for similarity, is reduced to a minimum, but is still adequate to permit the selection of the true road and exact location of the car in the road map, thus reducing the burden of pattern-matching in the central processor unit to the minimum possible.

Referring to Fig. 4 (a), if the car is running on a straight road having no branches within a predetermined distance L from the last presumable current car position $x'$, the subsequent presumable current car position x is set the predetermined distance L ahead from the last presumable current car position $x'$ on the same road. Referring to Fig. 4 (b), if the car is running on a straight road having branches within a predetermined distance L from the last presumable current car position $x'$, the subsequent presumable current car positions x1, x2, and x3 are set the predetermined distance L ahead from the last presumable current car position $x'$ on all the branches

$$(1_1 + 1_2 = \ = 1_1 + 1_3 = 1_1 + 1_4 = L).$$

Each time the distance measuring unit 1 detects that the car has run a given constant distance L, the signal processor 3 carries out the necessary algorithmic operation with reference to the coordinates of the position of the selected road appearing on the screen of the display unit 7 to automatically put presumable current car positions on the roads. Presumable current car positions may be sequentially renewed after a predetermined time rather than a predetermined distance.

Also, the interval between subsequent settings of presumable current car positions may be varied depending on the traffic condition of the road. The X-and Y- coordinates of each road are stored in the road map memory medium 5.

Next, a decision is made as to whether or not the distance between each of the presumable current car positions and the last estimated current car position which may deviate from all the roads, is within a given tolerance and a road or roads having the presumable current car positions within such tolerance are selected, and only the road or roads thus selected will be subjected to pattern-matching.

Referring to Fig. 5, the distances between presumable current car positions x ($x_1$, $x_2$ and $x_3$) and the estimated current car position P are indicated at D ($D_1$, $D_2$ and $D_3$).

Presumable current car positions which meet the following equation (1), are selected.

$$D \leqq \alpha L + M \qquad (1)$$

where "M" stands for a predetermined allowance, for instance 50 metres "$\alpha$" stands for a coefficient relating to the accuracy with which the car is located with reference to running distance as a parameter, for instance 5%, and "L" is set, for instance, at 100 metres.

Alternatively, presumable current car positions which are found on roads extending within a predetermined angular tolerance when measured with respect to the direction in which the car is about to move from the last estimated current car position, may be selected to determine which roads are nominated for pattern-matching.

For a relatively small value of "M" only the presumable current car position $x_2$ may be selected, and then the road on which the presumable current car position $x_2$ is found will be "nominated" for pattern matching.

Thus, if there are many roads in the vicinity of the last estimated current car position,a reduced number of most probable true roads will be selected for pattern matching, thereby minimizing the burden of pattern matching process.

In a travel path displaying apparatus according to the present invention the direction of a car is constantly monitored, and each time the integration of angular variations increases above a predetermined amount, the travel trace is presumed to change in shape, and then a necessary pattern matching is carried out. Apparently, this will substantially reduce the burden of pattern matching, compared with that which would be required if a pattern matching were carried out each time a presumable current car position is set after running a predetermined distance.

Specifically, as seen from Fig. 6, an angular direction $w_1$ (i = 1,2,3,...) is determined at points a,b,c,d,..., predetermined distances apart from each other, an angular variation is determined on the basis of the angular direction and the previously determined angular direction, and the accumulation W of these angular variations is calculated from the following equation:

$$W = \sum_{i=1}^{n} \left| w_{i+1} - w_i \right| \qquad (i=1, 2, 3, \ldots) \qquad (2)$$

When the angular accumulation W increases above a predetermined value, the travel trace running from the start point "a" (at which the last pattern matching was carried out) to the last estimated current car position is selected and "nominated" for pattern matching.

Thus, a travel trace having a noticeable change in shape is selected for pattern-matching. Therefore, the accuracy with which the pattern matching is carried out, will be substantially improved, and in addition, the number of times pattern-matching is necessary will be substantially reduced. As seen from Fig. 7, a road pattern to be "nominated" for pattern-matching is the one having presumable current car positions $x'$ thereon with the presumable current position x corresponding to the last estimated current car position P at its head and with the point S at which the last pattern-matching was carried out at its tail.

In forming a road pattern having presumable current car positions thereon for the purpose of carrying out pattern-matching efficiently, it is necessary to increase the value of M in the equation (1) at a given fixed rate with the increase of the travelling distance of the car because the distance between an estimated current car position and a corresponding presumable car position will increase with the increase of the travelling distance of the car.

Also, in carrying out a necessary pattern-matching between a trace pattern RP and a "nominated" road pattern KP, as shown in Figures 8(a) and 8(b) respectively, the signal processing unit 3 works on these patterns to convert them into approximations of broken line of equal length, and then a pattern matching is carried out between each of subsequent vectors in the trace and road pattern approximations. This divisional pattern-matching can be carried out by comparing each vector with a corresponding one in direction and position, and it can be carried out with ease and accuracy.

Specifically, a positional correlation is determined between the trace pattern and the road pattern by first, rotating the trace pattern until it is put in parallel relation with the road pattern, and then, summing the distances between individual vectors of the trace and road pattern approximations as follows:

First, the rotating angle $\theta$ of a series of vectors ($s_1, s_2, s_3 \ldots, sn$) of the trace pattern with respect to a series of vectors ($r_1, r_2, r_3 \ldots, r_n$) of the road pattern is determined by:

$$\theta = \sum_{i=1}^{n} \omega(i) \cdot \cos^{-1}(s_i \cdot r_i / |s_i| \cdot |r_i|) \times 1 / \sum_{i=1}^{n} \omega(i) \qquad (3)$$

where $\omega(i)$ is a weight function, and $|s_1| = |s_2| = |s_3| = ....|s_n| = |r_1| = |r_2| = .... = |r_n|$.

Second, the series of trace vectors is rotated by $\theta$ by using the following equation:

$$s_i' = \begin{pmatrix} \cos\theta & -\sin\theta \\ \sin\theta & \cos\theta \end{pmatrix} s_i \qquad (4)$$

The rotation of the trace vectors causes reduction of directional errors, if any.

Third, the value "f" of the positional correlation between the trace and road vector series is determined by:

$$f = \sum_{i=1}^{n} \left| \sum_{j=1}^{i} s_j - \sum_{j=1}^{i} r_j \right| \qquad (5)$$

A distance error may be caused in estimating a current car position P, and therefore, taking such distance error into consideration, the positional correlation values f are determined with respect to extended and shortened road patterns. These can be formed by extending and shortening the nominated road pattern from its top position x by up to $\delta$ (several tens of metres).

Finally, the smallest value is selected from these correlation values f, and if the smallest value thus selected is found to be below a given reference value, it is decided that these patterns are mated. Then, the trace pattern RP is so translated that the last current car position P may be put on the top position of the road pattern (for instance $x + \delta$ position), and then the trace pattern RP is rotated by $\theta$ so that it may be put in registration with the road pattern , as shown in Figure 9.

The pattern-matching process thus described permits correction of the position of a car if its estimated position is determined as separated from every road appearing on a road map.

The extending or shortening distance from the last estimated current position x on the nominated road is divided into a plurality of segments, and then the plurality of road patterns having extending or shortening sections at their top positions, are formed. Then, the correlation value f is determined between each road pattern and the trace pattern. When the smallest correlation value f is found to be below a reference value, a decision of establishment of pattern-matching is made. This process improves the accuracy with which pattern-matching is effected.

In selectively nominating a road for pattern-matching with reference to the last estimated current car position x as described earlier: if the car deviates from all roads in the road map as shown in Fig. 10, and if the estimated current car position P is too far from the roads to apply Equation 1 in determinning which road the corresponding presumable current position x is to be put, then no road can be nominated for pattern-matching, and therefore pattern-matching will be impossible.

In an attempt to carry out necessary pattern-matchings without interruption even if the car deviates too far from all roads to determine which road a presumable current car position is to be put on, a search is made for a road or roads running across a circle having a predetermined radius (for instance, 100 meters) with its centre at the last estimated current car position, and, if such road or roads are found, a tentatively presumable current car position or positions are set on the road or roads at the point or points which are closest to the last estimated current car position. The tentatively presumable current car position or positions are renewed each time the car runs a predetermined distance until they come close enough to the last estimated current car position to permit application of Equation 1, and then the last tentatively presumable current car position or positions are regarded as equivalent to the real presumable current car position or positions. Thus, necessary pattern-matching can be effected . In practice, while the car is deviating from all roads in the road map, the image of the travel trace is not given on the screen, and after the presumable current car position is set on the selected road, necessary pattern-matchings are carried out between the selected road patterns and the travel trace pattern.

As for a decision as to whether or not there is a road within a fixed distance range from the last estimated current car position, it may be made without interruption Otherwise, such decision may be made at intervals, for instance at every occurrence of a timing pulse or each time the car runs a predetermined distance (for instance 100 meters).

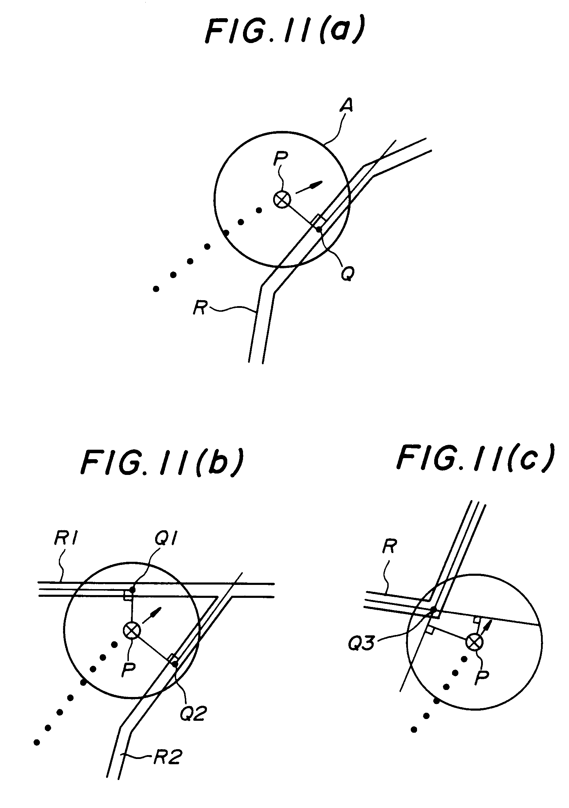

Fig.11a shows that there is a road R running across the circle A which has its center on the last estimated current car position P. Then, a tentatively presumable current car position is put on the point Q at which the road R and a line from the last estimated current car position P1 extending perpendicular to the road R cross each other.

Fig.11b shows that there are two roads R1 and R2 running across the circle A which has its center on the last estimated current car position P. Then, tentatively presumable current car positions are put on the point Q1 and Q2 at which the roads R1 and R2 and lines extending from the last estimated current car position P perpendicular to the roads R1 and R2 cross each other.

Fig.11c shows that there is a road R running across the circle A which has its center on the last estimated current car position P, but not permitting a line to be drawn perpendicular to the road R. In this case a tentatively presumable current car position is put on the curve Q3 of the road which is closest to the last estimated car position P.

In order to reduce the time involved for catching the sight of a road within the circle despite the increasing erroneous estimation of current car position P, the radius of the circle A may be varied proportionally to the running distance after no presumable current car position "x" can be determined with reference to Equation 1.

As is apparent from the above, in the case that the car position, if indicated on the screen, would deviate from the road on which the car is supposed to run as a result of accumulation of errors in estimating the current car position, the estimated car position is corrected by carrying out a pattern-matching between the road pattern and the trace pattern beginning with the last estimated current car position. Then, a presumable current car position or positions are put on the road on which the car is supposed to run or on the branch roads extending from the road; a decision is made as to whether or not a certain relation, representing the possible erroneous locating range, holds between the last estimated current car position and each presumable current car position, and the presumable current car position or positions which were found to satisfy the relation, are selected; a pattern-matching is carried out between the travel trace pattern and each road pattern having the so selected presumable current car position thereon; and finally, the last estimated current car position is shifted to be in registration with the presumable current car position, or one of the presumble current car positions, on the road pattern, thus completing correction of the last estimated current car position. According to this invent ion the number of roads selected for pattern-matching can be reduced and accordingly the necessary pattern-matchings can be carried out efficiently, and correction of the current car position can be performed more promptly with acceptable accuracy.

## Claims

**1.** An apparatus for displaying a travel path, the apparatus comprising:

means for successively estimating coordinates of a current position of a moving body;

means for storing data relating to the successively estimated current positions of the moving body and data relating to the coordinates of roads along which the body may move;

display means for showing successively determined and/or estimated current positions of the moving body on a map including the roads; and

processing means, characterised in that the processing means is adapted such that:

at predetermined intervals it calculates presumable current positions for the body, a presumable current position being on a road at a distance, from a previously determined position for the body, that corresponds to the distance estimated to have been travelled by the body from that previously determined position;

for each presumable current position, a check is made to determine whether or not a given relationship between the presumable current position and the current estimated position is satisfied, and the or each presumable current position for which the relationship is satisfied becomes a selected presumable position;

pattern matching is effected, as required, between the estimated travel path of said moving body to the current estimated position, and only the or each road pattern from the previously determined position which includes a selected presumable current position; and

one such selected presumable current position is determined, on the basis of such pattern matching, to be the current position of the moving body.

2. An apparatus according to claim 1, wherein said predetermined intervals are predetermined distances travelled by the moving body.

3. An apparatus according to claim 2, further comprising means for varying said predetermined distance.

4. An apparatus according to any preceding claim, wherein the given relationship between the presumable current position and the current estimated position is satisfied when the distance between the two positions is calculated to be less than a predetermined distance.

5. An apparatus according to one of claims 1, 2 or 3, wherein the given relationship between the presumable current position and the current estimated position is satisfied when the angle, between the direction in which the moving body is about to leave the current estimated position and the direction in which the road having the presumable current position thereon extends, is calculated to be less than a predetermined angle.

6. An apparatus according to any preceding claim, wherein pattern comparison is carried out, after each predetermined interval, between the pattern of successive estimated current positions and a selected road map.

7. An apparatus according to one of claims 1 to 5, wherein, after each predetermined interval, an angular increment is determined, and, each time an accumulation of such angular increments reaches a predetermined amount, pattern comparison is carried out between the pattern of successive estimated current positions and a road pattern which is determined by connecting successive presumable current positions.

8. An apparatus according to claims 4 or 5, or claim 7 when appendant to claim 4 or 5 wherein said predetermined distance, or said predetermined angle, is increased by a given amount for each predetermined interval which has elapsed since the preceding pattern comparison.

9. An apparatus according to any preceding claim, wherein a selected road on the road map and a pattern of successive estimated current positions are each approximated by a respective line each constituted by a series of straight segments of equal length, and the respective lines are subjected to pattern comparison.

10. An apparatus according to claim 9 the processor being adapted such that the pattern comparison comprises the steps of rotating the pattern of successive estimated current positions by means of an algorithmic operation to put it in parallel relationship with the selected road of the road map; determining the correlation between the patterns by adding the distances between the end-points of the incremental vectors forming the lines approximating the patterns; and identifying the pattern of successive estimated current positions with the selected road when the sum of the distances thus found is calculated to be less than a predetermined value.

11. An apparatus as claimed in any preceding claim, wherein the given relationship between a presumable current position and a current estimated position is satisfied if the two positions are separated by less than a first predetermined distance and wherein the processor is adapted such that, if the given relationship is not satisfied for any presumable current position, a search is made in the road map for a road running within a second predetermined distance from the last estimated current position of the moving body, and a presumable current position is tentatively set on the road thus found, or on the road closest to the last estimated current position of the moving body if a plurality of roads should be found within the second predetermined distances and such that the tentatively set presumable current position is moved along the same road after each predetermined interval, and the tentatively set presumable current position is identified with the real presumable current position when the distance between the latest tentatively presumable current position and the last estimated current position of the moving body are found to be separated by less than the first predetermined distance.

**Revendications**

1. Un dispositif pour l'affichage d'un trajet, ce dispositif comprenant :

un moyen pour l'estimation successive des coordonnées d'une position actuelle d'un corps en déplacement ;

un moyen pour la mémorisation de données relatives aux positions actuelles successivement estimées du corps en déplacement et de données relatives aux coordonnées de routes le long des quelles circule ou est susceptible de circuler le corps précité ;

un moyen d'affichage pour la représentation des positions actuelles successivement déterminées et/ou estimées du corps en déplacement, sur une carte routière ; et

un moyen de traitement de données, le dispositif étant caractérisé en ce que le moyen de traitement est adapté de façon que :

ce moyen de traitement, à des intervalles prédéterminés, calcule des positions actuelles présumables pour le corps, une position actuelle présumable se situant sur une route à une distance, à partir d'une position préalablement déterminée pour le corps, qui correspond à la distance présumée parcourue par le corps à partir de cette position préalablement déterminée ;

pour chaque position actuelle présumable, un contrôle soit effectué pour déterminer s'il existe ou non un rapport donné pertinent entre la position actuelle présumable et la position actuelle estimée, et que la position actuelle présumable, ou chaque position actuelle présumable pour laquelle existe ce rapport devienne une position présumable sélectionnée ;

que soit effectué en fonction des besoins un ajustement de modèle ou grille entre le trajet estimé du dit corps en déplacement par rapport à la position actuelle estimée et seulement le modèle ou grille de route, ou chaque modèle ou grille de route, à partir de la position préalablement déterminé, qui inclue une position actuelle présumable sélectionnée ; et

de façon que cette position actuelle présumable sélectionnée soit déterminée sur la base du dit ajustement de grille ou modèle comme étant la position actuelle du corps en déplacement.

2. Un dispositif selon la revendication 1, dans lequel les dits intervalles pré-déterminés sont des distances pré-déterminées parcourues par le corps en déplacement.

3. Un dispositif selon la revendication 2, comprenant en outre un moyen pour la variation de la dite distance pré-déterminée.

4. Un dispositif selon une quelconque des revendications précédentes, dans lequel le rapport donné pertinent entre la position actuelle présumable et la position actuelle estimée existe lorsque la distance entre les deux positions est calculée comme étant inférieure à une distance pré-déterminée.

5. Un dispositif selon une des revendications 1, 2 ou 3, dans lequel le rapport donné pertinent entre la position actuelle présumable et la position actuelle estimée existe lorsque l'angle entre la direction dans laquelle le corps en déplacement s'apprête à quitter la position actuelle estimée et la direction dans laquelle s'étend la route comportant la position actuelle présumable est calculé comme étant inférieur à un angle pré-déterminé.

6. Un dispositif selon une quelconque des revendications précédentes, dans lequel une comparaison de modèle ou de grille est effectuée, après chaque intervalle pré-déterminée, entre le modèle des positions actuelles estimées successives et une carte routière sélectionnée.

7. Un dispositif selon une des revendications 1 à 5, dans lequel, après chaque intervalle prédéterminé, on détermine un accroissement angulaire, et chaque fois qu'une accumulation de ces accroissements angulaires atteint une valeur pré-déterminée, une comparaison de modèle ou grille est effectuée entre le modèle de positions actuelles estimées successives et un modèle de route qui est déterminé par la mise en liaison de positions actuelles présumables successives.

8. Un dispositif selon les revendications 4 ou 5, ou selon la revendication 7 lorsqu'elle est subordonnée à la revendication 4 ou 5, dans lequel la dite distance pré-déterminée, ou le dit angle prédéterminé, s'accroit d'une valeur donnée pour chaque intervalle pré-déterminé s'étant écoulé depuis la comparaison précédente de modèle ou grille.

9. Un dispositif selon une quelconque des revendications précédentes, dans lequel une route sélectionnée sur la carte routière et un modèle de positions actuelles estimées successives sont mis chacun en approximation par une ligne respective, chaque ligne étant constituée par une série de segments

rectilignes de longueur égale, et les lignes respectives étant soumises à la comparaison de modèle.

**10.** Un dispositif selon la revendication 9, le processeur est conçu de manière que la comparaison de modèle comprenne les phases suivantes : rotation du modèle de positions actuelles estimées successives au moyen d'une opération algorithmique afin de mettre ce modèle en rapport parallèle avec la route sélectionnée de la carte routière ; détermination de la corrélation entre les modèles par addition des distances entre les points d'extrémité des vecteurs d'accroissement formant les lignes mettant les modèles en approximation ; et
identification des modèles de positions actuelles estimées successives avec la route sélectionnée lorsque le total des distances ainsi trouvé est calculé comme étant inférieur à une valeur prédéterminée.

**11.** Un dispositif comme revendiqué dans une quelconque des revendications précédentes, dans lequel le rapport donné entre une position actuelle présumable et une position actuelle estimée existe de façon pertinente si les deux positions sont séparées par moins qu'une première distance pré-déterminée, et dans lequel le processeur est conçu de manière que si le rapport donné n'existe pas de manière pertinente pour toute position actuelle présumable quelconque, une recherche soit exécutée dans la carte routière pour une route courant dans les limites d'une deuxième distance pré-déterminée à partir de la dernière position actuelle estimée du corps en déplacement, et qu'une position actuelle présumable soit fixée expérimentalement sur la route ainsi trouvée, ou sur la route la plus proche de la dernière position actuelle estimée du corps en déplacement si une pluralité de routes était trouvée dans les limites des deuxièmes distances pré-déterminées, le dit processeur étant également conçu de manière que la position actuelle présumable fixée expérimentalement soit déplacée le long de la même route après chaque intervalle pré-déterminé, et que la position actuelle présumable fixée expérimentalement soit identifiée avec la position actuelle présumable réelle lorsque la distance entre la position actuelle présumable établie expérimentalement la plus récente et la dernière position actuelle estimée du corps en déplacement est constatée comme séparant ces deux positions par moins que la première distance pré-déterminée.

## Patentansprüche

**1.** Vorrichtung zur Darstellung einer Route mit
Mitteln zum aufeinanderfolgenden Abschätzen von Koordinaten einer gegenwärtigen Position eines sich bewegenden Gegenstandes;
Mitteln zum Speichern von Daten bezüglich der aufeinanderfolgend geschätzten gegenwärtigen Positionen des sich bewegenden Gegenstandes und Daten bezüglich der Koordinaten von Straßen, entlang derer sich der Gegenstand bewegen kann;
Displaymitteln zur Anzeige von aufeinanderfolgend bestimmten und/oder abgeschätzten gegenwärtigen Positionen des sich bewegenden Gegenstandes auf einer Landkarte mit den Straßen und
ein Verarbeitungsmittel,
dadurch **gekennzeichnet,**
daß das Verarbeitungsmittel so ausgelegt ist, daß es bei festgelegten Intervallen vermutliche gegenwärtige Positionen für den Gegenstand berechnet, wobei sich eine vermutliche gegenwärtige Position auf einer Straße in einer Entfernung von einer davor für den Gegenstand bestimmten Position befindet, die der Entfernung entspricht, die schätzungsweise vom Gegenstand seit jener davor bestimmten Position zurückgelegt worden ist,
daß für jede vermutliche gegenwärtige Position eine Überprüfung durchgeführt wird, um zu bestimmen, ob eine gegebene Beziehung zwischen der vermutlichen gegenwärtigen Position und der abgeschätzten gegenwärtigen Position erfüllt ist oder nicht, wobei die oder jede vermutliche gegenwärtige Position, für die die Beziehung erfüllt ist, eine ausgewählte vermutliche Position wird,
daß je nach Erfordernis eine Musteranpassung zwischen der geschätzten Route des sich zur gegenwärtigen geschätzten Position hinbewegenden Gegenstandes und nur dem oder jedem Straßenmuster von der davor bestimmten Position aus, das eine ausgewählte vermutliche gegenwärtige Position enthält, durchgeführt wird und
daß auf der Basis einer derartigen Musteranpassung solch eine ausgewählte vermutliche gegenwärtige Position dazu bestimmt wird, die gegenwärtige Position des sich bewegenden Gegenstands zu sein.

**2.** Vorrichtung nach Anspruch 1,

bei der die festgelegten Intervalle vom sich bewegenden Gegenstand zurückgelegte festgelegte Entfernungen sind.

3. Vorrichtung nach Anspruch 2,
die außerdem Mittel zur Änderung der festgelegten Entfernung aufweist.

4. Vorrichtung nach einem der vorhergehenden Ansprüche, bei der die gegebene Beziehung zwischen der vermutlichen gegenwärtigen Position und der abgeschätzten gegenwärtigen Position erfüllt ist, wenn die Rechnung ergibt, daß die Entfernung zwischen den zwei Positionen kleiner als die festgelegte Entfernung ist.

5. Vorrichtung nach Anspruch 1, 2 oder 3,
bei der die gegebene Beziehung zwischen der vermutlichen gegenwärtigen Position und der abgeschätzten gegenwärtigen Position erfüllt ist, wenn die Rechnung ergibt, daß der Winkel zwischen der Richtung, in der der sich bewegende Gegenstand gerade im Begriff ist, die abgeschätzte gegenwärtige Position zu verlassen, und der Richtung, in die sich die Straße mit der vermutlichen gegenwärtigen Position darauf erstreckt, kleiner als ein vorgegebener Winkel ist.

6. Vorrichtung nach einem der vorhergehenden Ansprüche, bei der nach jedem festgelegten Intervall ein Mustervergleich zwischen den aufeinanderfolgenden geschätzten gegenwärtigen Positionen und einer ausgewählten Straßenkarte durchgeführt wird.

7. Vorrichtung nach einem der Ansprüche 1 bis 5,
bei der nach jedem festgelegten Intervall ein Winkelzuwachs bestimmt wird und jedes Mal, wenn die Akkumulation derartiger Winkelzuwächse einen festgelegten Betrag erreicht, ein Mustervergleich zwischen dem Muster von aufeinanderfolgenden abgeschätzten gegenwärtigen Positionen und einem Straßenmuster, das durch Verbinden aufeinanderfolgender vermutlicher gegenwärtiger Positionen bestimmt wird, durchgeführt wird.

8. Vorrichtung nach Anspruch 4 oder 5, oder nach Anspruch 7,
wenn dieser auf Anspruch 4 oder 5 rückbezogen ist, bei der die festgelegte Entfernung oder der festgelegte Winkel für jedes festgelegte Intervall, das seit dem vorhergehenden Mustervergleich verstrichen ist, um einen festgelegten Betrag erhöht wird.

9. Vorrichtung nach einem der vorhergehenden Ansprüche, bei der eine ausgewählte Straße auf der Straßenkarte und ein Muster von aufeinanderfolgenden abgeschätzten gegenwärtigen Positionen jeweils durch eine entsprechende Linie angenähert sind, die jeweils aus einer Reihe von geraden Segmenten gleicher Länge gebildet sind, und bei der die entsprechenden Linien einem Mustervergleich unterworfen werden.

10. Vorrichtung nach Anspruch 9,
bei der der Prozessor so ausgelegt ist, daß der Mustervergleich folgende Schritte umfaßt:
Drehung des Musters von aufeinanderfolgenden abgeschätzten gegenwärtigen Positionen mit Hilfe einer algorithmischen Operation, um es parallel zu der ausgewählten Straße der Straßenkarte auszurichten,
Bestimmung der Korrelation zwischen den Mustern durch Addieren der Entfernungen zwischen den Endpunkten der Zuwachsvektoren, die die Linien bilden, die die Muster nähern und
Identifizierung des Musters von aufeinanderfolgenden abgeschätzten gegenwärtigen Positionen mit der ausgewählten Straße, wenn die Rechnung ergibt, daß die Summe der so gefundenen Entfernungen kleiner als ein vorgegebener Wert ist.

11. Vorrichtung nach einem der vorhergehenden Ansprüche, bei der die gegebene Beziehung zwischen einer vermutlichen gegenwärtigen Position und einer abgeschätzten gegenwärtigen Position erfüllt ist, wenn die zwei Positionen um weniger als eine erste festgelegte Entfernung auseinander liegen,
und bei der der Prozessor so ausgelegt ist, daß
wenn die gegebene Beziehung für keine vermutliche gegenwärtige Position erfüllt ist, in der Straßenkarte eine Suche nach einer Straße durchgeführt wird, die innerhalb einer zweiten vorgegebenen Entfernung von der letzten abgeschätzten gegenwärtigen Position des sich bewegenden Gegenstandes

verläuft,
eine vermutliche gegenwärtige Position versuchsweise auf die so gefundene Straße oder auf die jenige Straße gesetzt wird, die der letzten abgeschätzten gegenwärtigen Position des sich bewegenden Gegenstandes am nächsten liegt, wenn eine Vielzahl von Straßen innerhalb der zweiten vorgegebenen Entfernungen gefunden werden sollte,
und daß die versuchsweise gesetzte vermutliche gegenwärtige Position entlang derselben Straße nach jedem festgelegten Intervall entlang derselben Straße bewegt wird und die versuchsweise gesetzte vermutliche gegenwärtige Position mit der wirklichen vermutlichen gegenwärtigen Position identifiziert wird, wenn sich herausstellt, daß die Entfernung zwischen der neuesten versuchweisen vermutlichen gegenwärtigen Position und der letzten geschätzten gegenwärtigen Position des sich bewegenden Gegenstandes kleiner als die erste vorgewählte Entfernung ist.

FIG. 1

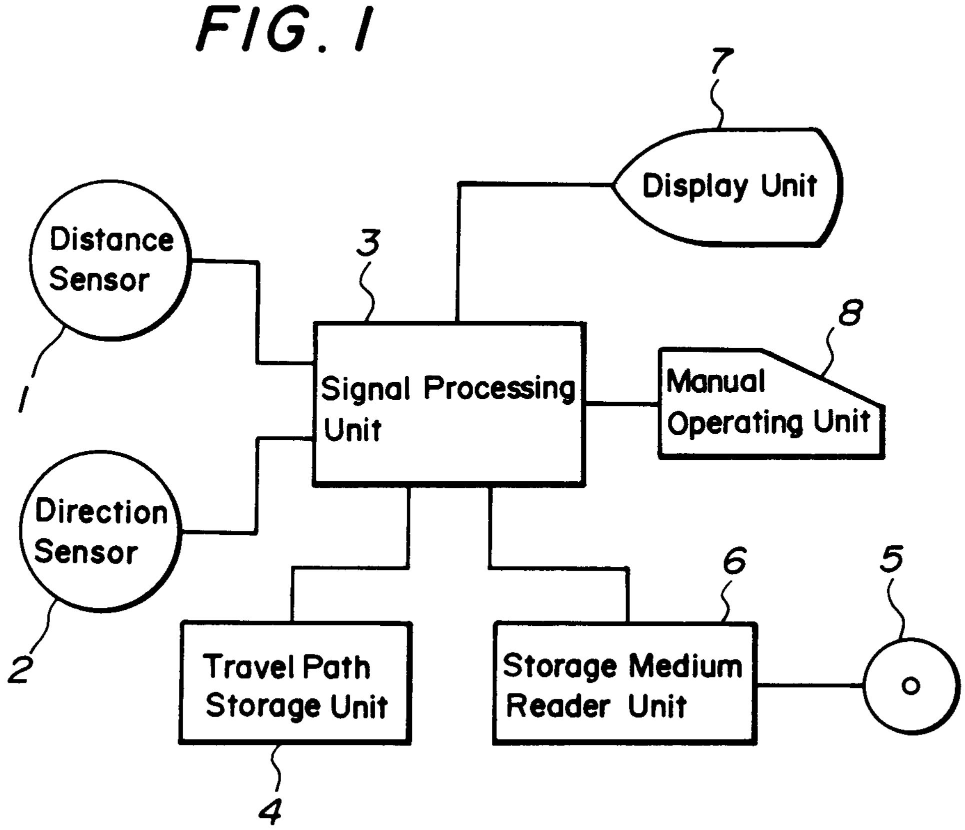
7
Display Unit
3
Distance Sensor
1
8
Signal Processing Unit
Manual Operating Unit
Direction Sensor
2
6
5
Travel Path Storage Unit
Storage Medium Reader Unit
4

FIG. 2

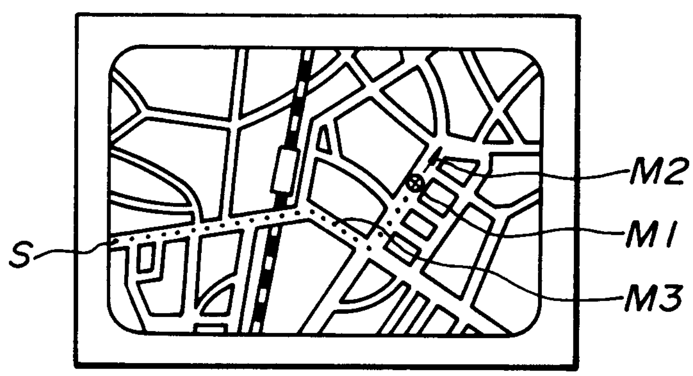
M2
M1
S
M3

FIG. 3

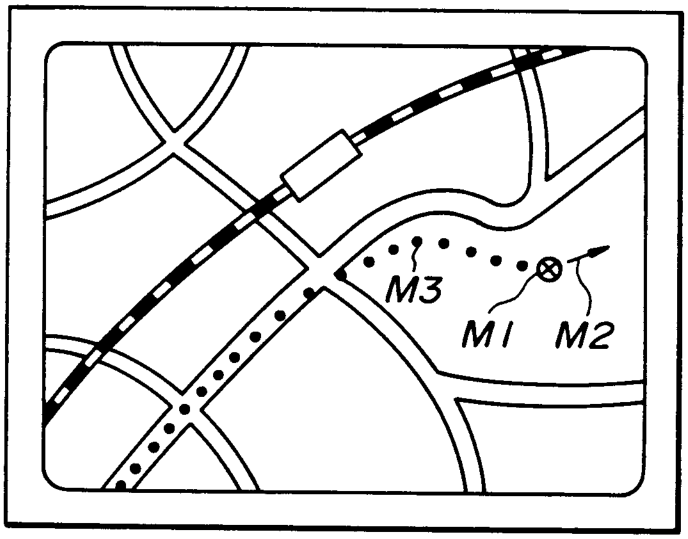


FIG. 4(a)

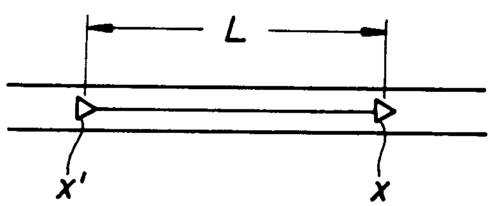


FIG. 4(b)

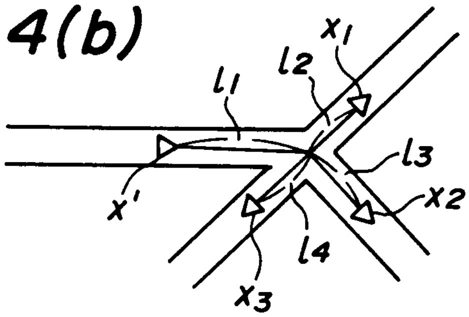

FIG. 5

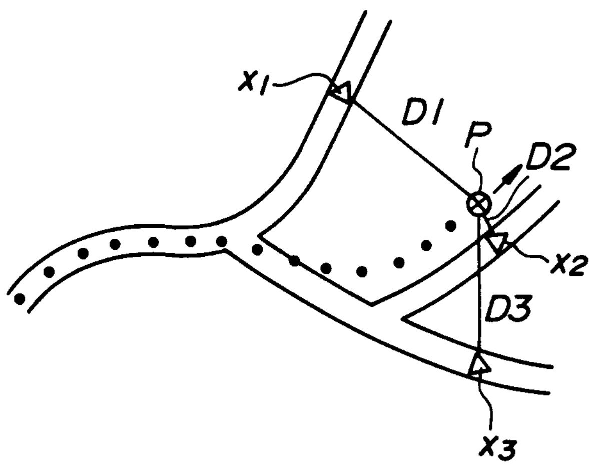


FIG. 6

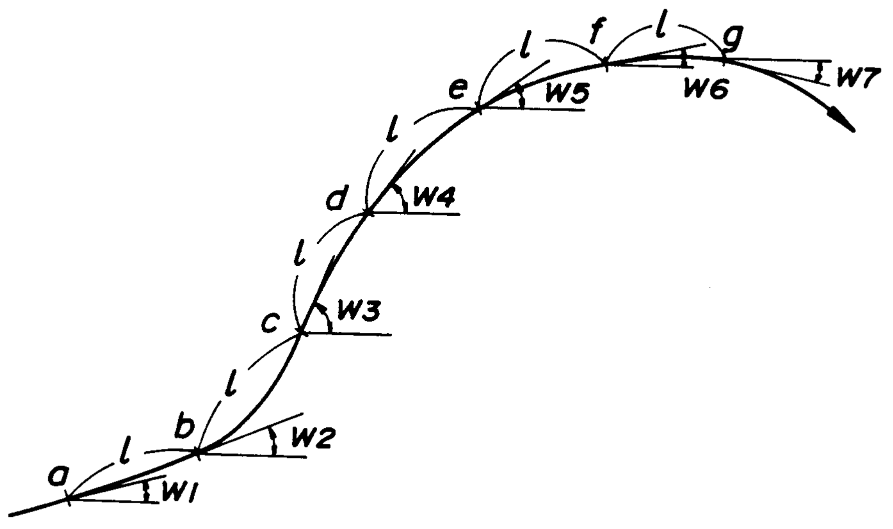

FIG. 7

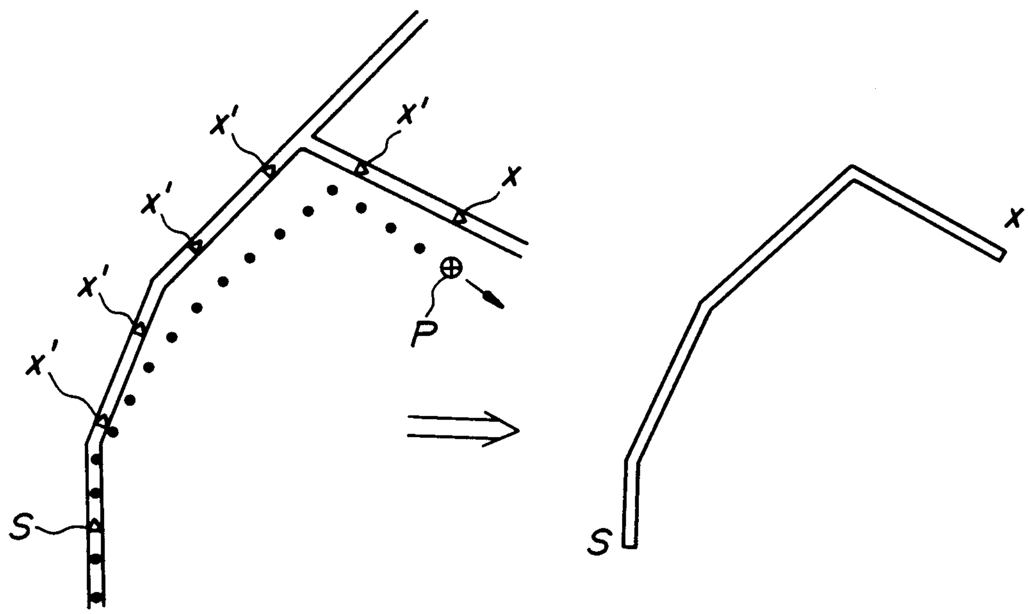


FIG. 8(a)

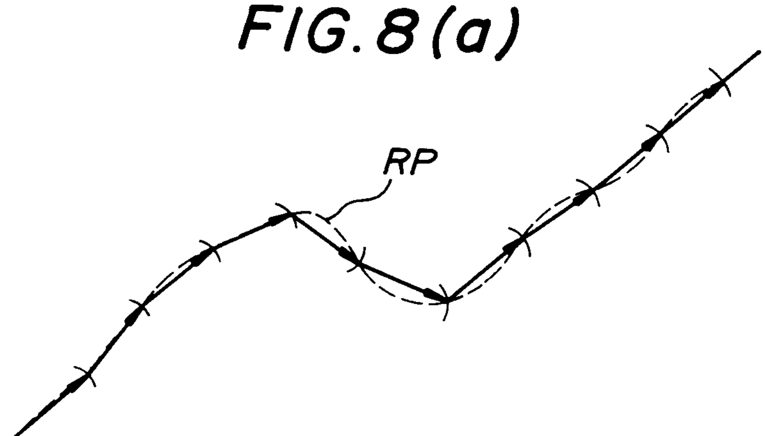


FIG. 8(b)

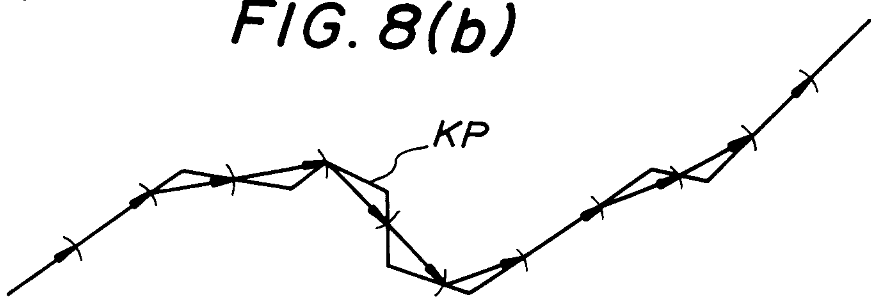

FIG. 9

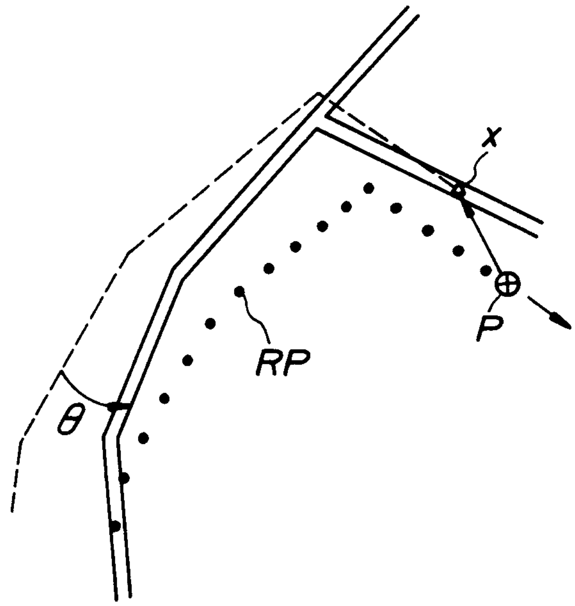


FIG. 10

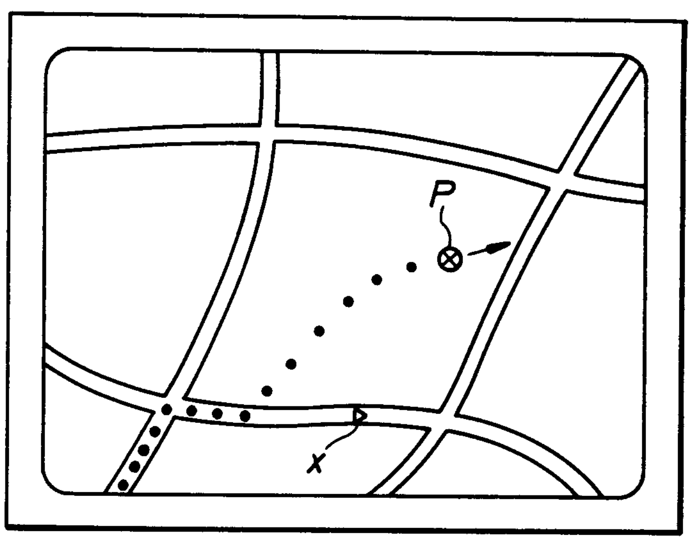

FIG. 11(a)

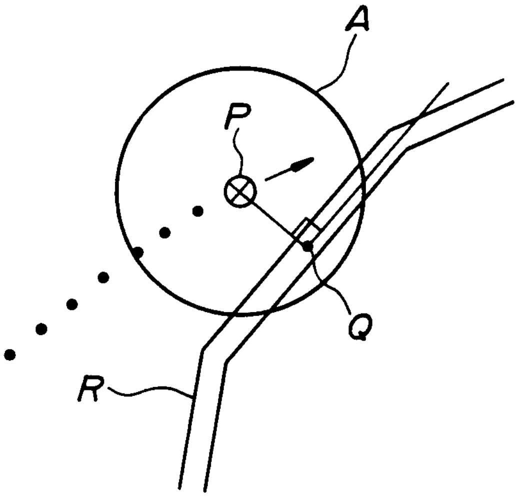


FIG. 11(b)

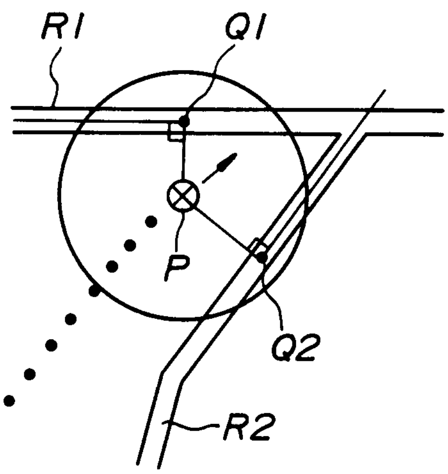


FIG. 11(c)